# FASCICULE DE BREVET EUROPEEN

(11) **EP 2 471 357 B1**
(45) Date de publication et mention de la délivrance du brevet: **07.03.2018**
(21) Numéro de dépôt: 12305007.2
(22) Date de dépôt: 03.01.2012
(51) Int. Cl.: A01K 1/015

(54) **Panneau de sol antidérapant pour animal d'élevage**
Rutschhemmende Bodenplatte für Zuchttiere
Non-slip floor panel for farm animals

(30) Priorité: 03.01.2011 FR 1150022
(43) Date de publication de la demande: 04.07.2012
(73) Titulaire: La Buvette, 08090 Tournes (FR)
(72) Inventeur: Bousquet, Jean-Philippe, 51480 Belval-Sous-Chatillon (FR)
(74) Mandataire: Rhein, Alain

(56) Documents cités:
- EP-A1- 0 050 997
- FR-A1- 2 829 785
- US-A1- 2008 072 514

## Description

La présente invention entre dans le domaine de l'agriculture, en particulier dans l'élevage d'animaux domestiques, notamment des bovins.

L'invention concerne plus particulièrement un panneau de sol antidérapant pour animal d'élevage.

Selon une application préférentielle, mais aucunement limitative, un tel panneau de sol antidérapant est de type caillebotis et équipe un dispositif de support pour enclos d'animal d'élevage, en particulier pour une case à veau.

De manière connue, une case à bovin se présente sous la forme d'un enclos constitué d'un enceinte périphérique ouverte sur le dessus et présente au moins une ouverture en face avant refermée par une porte. Ladite enceinte repose sur un support s'apparentant à un caillebotis. En partie sous-jacente, une fosse peut être ménagée de manière à collecter les saletés, notamment les déjections de l'animal.

Plus particulièrement, un tel caillebotis présente une forme parallélépipédique rectangle constituée d'un agencement de traverses juxtaposées parallèlement à espaces réguliers et fixées orthogonalement sur des longerons longitudinaux. Lesdits longerons et traverses sont généralement constitués en bois. Toutefois, ce type de matériau présente de nombreux inconvénients. En effet, il est rendu glissant lorsqu'il est humide, s'use sous l'effet des frottements des sabots de l'animal et absorbe les saletés, même traité, nécessitant un nettoyage fréquent et fastidieux. Il est alors utilisé des bois exotiques, plus chers et sujets à polémiques quant à l'exploitation environnementale qui en est faite.

De plus, le bois ne permet pas de supporter des charges importantes, notamment pour de gros animaux comme les bovins atteignant l'âge adulte, limitant son utilisation pour les petits ou les jeunes animaux, tels les porcs ou les veaux. Par ailleurs, l'espacement des traverses, nécessaire pour permettre la chute au sol des saletés et déjections de l'animal, peut incommoder voire blesser l'animal lorsqu'il y pose ses sabots.

C'est pourquoi il a été imaginé de remplacer le bois par un matériau plus résistant et plus facile à nettoyer. Il existe des caillebotis pour case à bovin constitués en béton ou en métal, tel de l'inox, de l'acier galvanisé ou de la fonte peinte. Un exemple d'un tel caillebottis en métal est décrit dans le document US 4 048 960 décrivant des dalles en aluminium conformées de manière à s'emboîter pour former un sol surélevé rigide et plan pour recevoir des animaux. Toutefois, le métal est rendu très glissant une fois humide et, à l'instar du béton, est un matériau froid nécessitant la création d'une zone de couchage spécifique, réalisée dans un matériau plus confortable pour l'animal. De plus, de tels matériaux sont lourds à déplacer, notamment pour le nettoyer ou nettoyer en dessous et accéder à la fosse. Par ailleurs, pour assurer la résistance du caillebottis en béton, son épaisseur est accrue, allant jusqu'à une dizaine de centimètres, entrainant un surpoids et rendant très difficile sa manutention.

Il a donc été choisi d'utiliser un matériau plus léger et offrant une résistance adaptée, comme du plastique, tel du polypropylène ou du polychlorure de vinyle (PVC). De plus, le plastique pouvant être moulé ou injecté, il est alors possible d'envisager d'autres formes de caillebotis, présentant une surface plane et ajourée. En somme, une ou plusieurs plaques sont disposées au sol ou sur un châssis, et sont ajourées régulièrement au moyen d'orifices, notamment en forme fentes, disposées régulièrement et pouvant constituer un treillage, lesdits orifices ayant des dimensions moins importantes que l'espacement initial entre les lattes de bois, assurant une surface plane sur lequel l'animal peut se tenir aisément.

Le plastique offre donc un matériau résistant, facile à nettoyer et qui permet à l'animal de s'y coucher directement.

Toutefois, un inconvénient réside toujours dans l'aspect lisse et glissant, surtout mouillé ou humide de tels caillebotis en matériau plastique. Même si les fentes ou orifices assurent une certaine résistance aux glissements des sabots de l'animal, une telle surface reste glissante, allant jusqu'à faire chuter l'animal, en particulier dans le cas de bovins possédant des onglons avec une surface d'appui au sol plus importante qu'un porcin.

Une solution a été d'ajouter en face supérieure des caillebotis, qu'ils soient en bois, en métal ou en plastique, des glissières métalliques avec des redents, limitant les glissades de l'animal. Toutefois, ces saillies gênent ce dernier lorsqu'il se couche ou s'allonge.

Une solution alternative a donc été de rendre la surface des caillebotis antidérapante, au travers de reliefs de quelques millimètres ménagés en saillie en face supérieure. Ces reliefs sont ménagés à intervalles réguliers entre les orifices susmentionnés. Plusieurs types de reliefs sont utilisés : soit des stries ou des chevrons ou soit des ergots, voire des picots.

En cours d'utilisation, il a été constaté que les stries devaient être orientées différemment les unes des autres pour que, si le sabot de l'animal glisse dans le sens longitudinal d'une strie, il vienne se bloquer comme une strie adjacente disposée dans un autre sens.

Un exemple de disposition de stries orthogonalement les unes par rapport aux autres est décrit dans le document EP 0 654 396.

Toutefois, on a remarqué que les picots constituaient une meilleure surface antidérapante que les stries ou les chevrons. Toutefois, une telle surface est très inconfortable pour l'animal s'il s'allonge, marquant sa peau et pouvant même le blesser dans le cas de picots. Les ergots, sous forme de plots bombés conformé en calotte sphérique, n'assurent pas une surface antidérapante adaptée. C'est pourquoi les stries seules sont généralement utilisées, orientées toutes dans le même sens et n'offrant pas une surface antidérapante optimale.

C'est pourquoi d'autres combinaisons ont été envisagées d'éléments antidérapants ont été envisagées.

Le document US 2008/0072514 décrit des caillebottis carrés divisés en quart séparés par des lignes médianes formées de picots. Chaque quart, de forme lui aussi carré, présente un quart de cercle définissant une zone pourvue d'éléments ponctuels annulaires, tandis que le reste de la surface du quart de caillebottis présentent des stries s'étendant parallèlement par rapport à la diagonale et les unes par rapport aux autres.

Ainsi, l'assemblage de plusieurs caillebottis forme des zones circulaires d'éléments ponctuels annulaires, séparées par des zones striées, les stries de chaque caillebottis contigu étant orthogonales entre elles.

Toutefois, la disposition des stries n'assure pas une bonne stabilité et n'empêche pas le glissement des sabots de l'animal qui, s'il s'allonge, se retrouve encore une fois marqué et indisposé par les larges zones d'éléments ponctuels circulaires.

Une autre solution est décrite dans le document FR 2 829 785 dont le caillebottis de forme carrée est subdivisé en neuf carrés plus petits, séparés par des parois verticales. A l'intérieur de chaque carré, neuf rehaussements sont répartis régulièrement et viennent en affleurement avec les chants supérieure desdites parois. En surface desdits rehaussements sont mangés des picots.

Un tel caillebottis n'assure une fonction d'anti-dérapage uniquement au niveau desdits picots, le sabot de l'animal pouvant glisser le long des chants des parois, et même se bloquer dans les espaces entre les rehaussements et lesdites parois.

Une dernière solution connue, décrite dans le document EP 0 050 997, selon un premier mode de réalisation, consiste en une répartition régulièrement d'éléments ponctuels de forme carrée et de forme cylindrique, les éléments ponctuels étant reliés les uns aux autres par des parois verticales.

Un second mode de réalisation se rapproche du document précédent. En effet, le caillebottis présente des alvéoles précédent. En effet, le caillebottis présente des alvéoles séparées par des parois qui servent de séparateurs et constituent des éléments longitudinaux antidérapant. De plus, lesdites parois forment un maillage, empêchant le glissement. De surcroît, au sein de chaque alvéole sont disposés deux plots, de forme cylindrique, assurant une résistance ponctuelle.

Toutefois, peu importe la réalisation, il a été constaté une mauvaise tenue de l'animal qui finit par déraper.

L'invention a pour but de pallier les inconvénients de l'état de la technique en proposant un panneau de sol comportant une surface antidérapante adaptée pour les bovins, même de grande taille, à savoir un animal pouvant peser plusieurs centaines de kilogrammes, notamment jusqu'à 350 kg.

Pour ce faire, l'invention concerne un panneau de sol antidérapant pour animal d'élevage, se présentant sous la forme d'une plaque et comportant ménagés en saillie en face supérieure des moyens antidérapants, comprenant une combinaison, d'une part, de premiers éléments longitudinaux se présentant sous la forme de stries rectilignes et définissant une surface d'appui et, d'autre part, de seconds éléments ponctuels définissant une surface d'accrochage, lesdits premiers et seconds éléments étant répartis à intervalles réguliers, deux premiers éléments longitudinaux adjacents étant orientés de sorte que leurs axes longitudinaux sont sécants, caractérisé en ce que les seconds éléments sont constitués d'un bombage présentant une forme cylindrique dont l'extrémité supérieure est surmontée d'un picot, ledit bombage comprenant une arête évasée constituant une collerette.

De préférence, deux stries rectilignes adjacentes sont orientées orthogonalement l'une par rapport à l'autre.

Selon un autre mode de réalisation, ledit panneau de sol est constitué en matériau plastique, notamment en polyéthylène rotomoulé. En effet, les éléments longitudinaux confèrent une surface d'appui pour les sabots ou le corps de l'animal allongé tandis que les éléments ponctuels assurent une accroche au niveau desdits sabots. Dès lors, la combinaison particulière d'ergots répartis selon une disposition spécifique entre les stries confère une surface antidérapante tout en permettant à l'animal de s'y coucher sans risque ou gêne, son corps étant alors essentiellement supporté par les stries.

De plus, lesdites stries présentent une disposition particulière : deux stries adjacentes pouvant être sensiblement perpendiculaires l'une part rapport à l'autre. Ainsi, le glissement éventuel le long d'une strie est bloqué par la strie suivante, en plus des ergots.

Par ailleurs, lesdits ergots présentent une forme particulière cylindrique surmontée d'un picot et dont l'arête supérieure forme une collerette, améliorant l'accroche du sabot de l'animal.

L'invention concerne aussi un dispositif de support pour enclos d'animal d'élevage, en particulier pour une case à bovin et à veau, ledit dispositif comprenant au moins un panneau de sol antidérapant selon l'invention.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue en perspective de trois quart avant d'un panneau de sol antidérapant selon l'invention de type caillebotis;
- la figure 2 est une représentation schématisée d'une vue de dessus d'un détail de la surface d'un tel panneau de sol antidérapant ; et
- la figure 3 est une représentation schématisée d'une vue en coupe verticale de la surface d'un mode particulier de réalisation d'un tel panneau de sol.

La présente invention concerne un panneau de sol antidérapant 1 pour animal d'élevage. En somme, un tel panneau 1 sert de surface d'appui destinée à recevoir tout type d'animal d'élevage, en position débout, couchée ou allongée. De plus, en position debout, ledit panneau évite tout risque de glissement des sabots de l'animal.

Un tel panneau de sol 1 peut être intégré au sein d'un dispositif de type enclos d'animal d'élevage, en particulier pour une case pour un jeune bovin ou pour un veau.

Une telle case (non représentée) comprend une enceinte périphérique, ouverte en parties supérieure et inférieure, et présentent au moins une ouverture en face avant, refermée par une porte. Ladite case vient directement reposer au sol, entourant au moins un panneau 1, ou bien directement sur un ou plusieurs panneaux 1 servant alors de support intermédiaire entre le sol et ladite case. En partie sous-jacente de cette dernière est généralement ménagée une fosse de récupération des saletés, notamment des déjections de l'animal.

Ledit panneau 1 selon l'invention est destiné à être posé au sol, directement ou par l'intermédiaire de pieds 2 ménagés en face inférieure 3, voire via un châssis. Dans le cadre d'une case pour animal d'élevage, ledit panneau 1 sert alors de surface sur laquelle l'animal se tient en position debout, couchée ou allongée.

On notera qu'une telle case comprend au moins un panneau 1, plusieurs de ces derniers pouvant être agencés et juxtaposés afin de former une surface de dimensions adaptées pour recevoir une case, voire plusieurs contiguës, voire former une seule grande case.

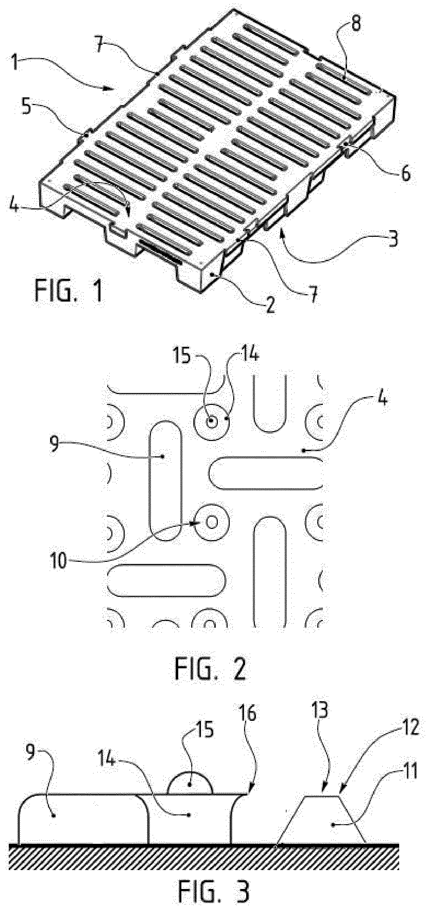

Pour ce faire, comme visible sur la figure 1, chaque panneau 1 peut comprendre des moyens de fixation par emboîtement avec des moyens de fixation complémentaire présents sur un panneau 1 adjacent. En somme, un bord d'un panneau comprend des moyens de fixation sous la forme d'au moins une partie mâle 5 conformée de manière à coopérer avec une partie femelle 6 constituant au moins les moyens de fixation complémentaire, ladite partie femelle 6 étant ménagée au sein du bord juxtaposé d'un second panneau. Un même panneau présente alors sur deux bords opposés, en particulier les bords longitudinaux 7, des parties mâles 5 et femelles 6 destinées à coopérer réciproquement avec les parties mâles et femelles 6 d'un autre panneau.

Selon le mode de réalisation représenté sur la figure 1, ladite partie mâle 5 présente la forme d'un redent en saillie divergente, de sorte qu'une fois emboîtée dans l'encoche d'une partie femelle 6 de forme complémentaire, les deux panneaux soient maintenus l'un par rapport à l'autre et bloqués en translation, empêchant notamment leur écartement.

De plus, au travers dudit panneau 1 sont ménagés des orifices de drainage 8. Ces derniers sont réalisés traversants, de manière à constituer des passages d'écoulements depuis la face supérieure 4 vers le dessous dudit panneau 1, notamment vers la fosse sous-jacente. Dès lors, ledit panneau 1 s'apparente à un caillebotis, à savoir qu'il constitue un treillis ajouré pour permettre l'écoulement des eaux, saletés et déjections. Ledit panneau de sol 1 selon l'invention se présente sous la forme d'une plaque. Il comporte ménagés en saillie en face supérieure 4 des moyens antidérapants, à savoir qu'ils confèrent à la surface une résistance et des frottements suffisants à tout élément au contact et en appui sur ledit panneau 1, de manière à en limiter les glissements.

Pour ce faire, lesdits moyens antidérapants comprennent une combinaison, d'une part, de premiers éléments longitudinaux 9 définissant une surface d'appui et, d'autre part, de seconds éléments ponctuels 10 définissant une surface d'accrochage.

Plus particulièrement, lesdits premiers 9 et seconds éléments 10 sont répartis à intervalles réguliers.

De manière plus précise, selon un mode de réalisation, lesdits second éléments 10 peuvent être agencés à selon un quadrillage, alors situés aux intersections de colonnes et rangées. L'espacement entre deux seconds éléments 10 consécutifs, selon une ligne ou une colonne, pouvant être de 20 à 30 millimètres, notamment un pas de 26 millimètres de distance entre les centres desdits deux seconds éléments adjacents horizontalement ou verticalement.

De plus, la densité moyenne approximative des seconds éléments 10 en surface dudit panneau 1 peut être d'environ 1000 à 2000 seconds éléments par mètre carré, notamment 1600/m². Bien entendu, cette densité est une moyenne qui peut être inférieure, notamment en raison des parties du panneau 1 évidée par les orifices de drainage 8.

Dès lors, la surface antidérapante ainsi constituée permet d'empêcher tout glissement des sabots de l'animal en stature debout, tout en permettant à l'animal de se coucher ou s'allonger sans gêne occasionnée.

Selon l'invention, lesdits premiers moyens 9 possèdent une orientation spécifique, limitant les risques de glissement. En effet, deux premiers éléments adjacents 9 sont orientés de sorte que leurs axes longitudinaux sont sécants. Ainsi, si le sabot de l'animal venait à glisser le long d'un premier élément 9, il viendrait alors buter contre le premier élément adjacent dont l'axe est orienté différemment.

Dans l'invention comme représenté sur la figure 2, lesdits premiers éléments 9 se présentent sous la forme de stries rectilignes.

Selon un mode spécifique aucunement limitatif de réalisation, chaque strie présente une longueur d'approximativement 20 millimètres pour une largeur d'environ 5 millimètres, notamment 3 millimètres au niveau de leur base inférieure, tandis qu'elles sont en saillie sur une hauteur d'environ 2 à 3 millimètres, notamment 2,5 millimètres.

En particulier, chaque strie présente la forme d'un prisme à face 11 triangulaire ou trapézoïdale, de manière à constituer réciproquement une arête ou deux arêtes supérieures 12 , avec alors dans ce dernier cas une face supérieure plane 13. Cette dernière (ou bien l'arête 12 unique) permet à l'animal de se **coucher,** reprenant la majorité de l'appui de sorte qu'il ne repose pas uniquement sur les seconds éléments 10.

Dès lors, deux stries rectilignes adjacentes peuvent être orientées orthogonalement l'une par rapport à l'autre.

On notera qu'on considère ici que deux stries sont adjacentes si elles sont alignées successivement, notamment selon une rangée ou une colonne.

Par ailleurs, selon un mode de réalisation préférentiel, lesdits seconds éléments 10 forment un appui ponctuel, à savoir que leurs dimensions, par rapport à celles des premiers éléments, constituent une zone ou une surface 2 à 5 fois moindre que la surface conférée par lesdites stries. En somme, la zone d'appui des seconds éléments s'apparente à un point ou un disque, notamment d'un diamètre n'excédant pas ou peu la largeur desdites stries.

De plus, selon l'invention lesdits seconds éléments 10 sont constitués d'un bombage 14 surmonté d'un picot 15. Ledit bombage 14 présente une forme cylindrique. Dès lors, ledit picot 15 peut être ménagé en relief en haut dudit bombage 14, en particulier en saillie sur la face supérieure dudit cylindre.

De plus, ledit picot 15 peut être conformé en calotte sphérique, en cylindre, en demi-sphère ou bien en pointe. Il assure ainsi une surface d'appui ponctuelle ou sensiblement ponctuelle qui n'autorise pas le glissement en appui selon un plan horizontal ou sensiblement horizontal.

Selon un mode spécifique aucunement limitatif de réalisation, chaque second élément 10 présente une section extérieure d'approximativement 5 à 8 millimètres, notamment 7,5 millimètres, pour une hauteur de 2 à 3 millimètre, notamment 2,5 millimètres.

Selon l'invention comme visible sur la figure 3, ledit bombage 14 présente une forme cylindrique dont l'extrémité supérieure surmontée dudit picot 15 comprend une arête évasée constituant une collerette 16. Cette dernière constitue une arête vive périphérique, sensiblement à la hauteur, à la même hauteur, en dessous ou au dessus, des stries des premiers éléments 9. Ainsi, cette arête vive annulaire vient empêcher tout glissement transversal, sans pour autant gêner un quelconque appui vertical.

On notera que cette collerette 16 peut être moulée spécifiquement ou bien obtenue par les bavures lors du moulage desdits seconds éléments 10.

Par ailleurs, selon le mode préféré de réalisation, ledit panneau de sol 1 est constitué en matériau plastique, notamment en polyéthylène rotomoulé. Ce matériau est léger et résistant, autant en charge qu'à l'usure par frottement. De plus, il est facilement lavage et ne s'altère pas ou peu au fil du temps, sans s'imprégner comme le béton ou le bois.

Un tel panneau de sol 1 peut aussi être réalisé en matériau métallique, composite ou synthétique, voire en béton ou analogue.

Comme évoqué précédemment, l'invention concerne aussi un dispositif de support pour enclos d'animal d'élevage, en particulier de type case à bovin et à veau, comprenant une enceinte périphérique équipée en partie sous-jacente d'au moins un caillebotis constitué par au moins un panneau de sol antidérapant selon l'invention.

Ainsi, le panneau de sol antidérapant 1 selon l'invention offre une surface d'accrochage des sabots de l'animal qui élimine les risques de glissement, même si ladite surface est humide ou mouillée, tout en assurant sans risque ou désagrément un appui du corps de l'animal en position couchée ou allongée.

## Revendications

1. Panneau de sol antidérapant (1) pour animal d'élevage, se présentant sous la forme d'une plaque et comportant ménagés en saillie en face supérieure (4) des moyens antidérapants, comprenant une combinaison, d'une part, de premiers éléments (9) longitudinaux se présentant sous la forme de stries rectilignes et définissant une surface d'appui et, d'autre part, de seconds éléments (10) ponctuels définissant une surface d'accrochage, lesdits premiers (9) et seconds (10) éléments étant répartis à intervalles réguliers, deux premiers éléments longitudinaux (9) adjacents étant orientés de sorte que leurs axes longitudinaux sont sécants, **caractérisé en ce que** les seconds éléments (10) sont constitués d'un bombage (14) présentant une forme cylindrique dont l'extrémité supérieure est surmontée d'un picot (15), ledit bombage (14) comprenant une arête évasée constituant une collerette (16).

2. Panneau de sol antidérapant (1) selon la revendication 1, **caractérisé par le fait que** deux stries rectilignes adjacentes sont orientées orthogonalement l'une par rapport à l'autre.

3. Panneau de sol antidérapant (1) selon l'une quelconque des revendications précédentes, **caractérisé par le fait qu'**il est constitué en matériau plastique, notamment en polyéthylène rotomoulé.

4. Dispositif de support pour enclos d'animal d'élevage, en particulier de type case à bovin et à veau, comprenant une enceinte périphérique équipée en partie sous-jacente d'au moins un caillebotis constitué par au moins un panneau de sol antidérapant (1) selon l'une quelconque des revendications précédentes.

## Patentansprüche

1. Rutschhemmende Bodenplatte (1) für Zuchttier in Form einer Tafel und aufweisend, ausgebildet hervorstehend auf der Oberseite (4), rutschhemmende Mittel, umfassend eine Kombination zum einen von ersten Längselementen (9) in Form von geraden Streifen, die eine Stützfläche definieren, und zum anderen von zweiten punktuellen Elementen (10), die eine Haftfläche definieren, wobei die ersten (9) und zweiten (10) Elemente in gleichmäßigen Intervallen verteilt sind, wobei zwei benachbarte erste Längselemente (9) derart ausgerichtet sind, dass sich ihre Längsachsen schneiden, **dadurch gekennzeichnet, dass** die zweiten Elemente (10) von einer Wölbung (14) gebildet sind, die eine zylindrische Form aufweist, auf deren oberem Ende eine Spitze (15) steht, wobei die Wölbung (14) eine erweiterte Kante umfasst, die einen Kragen (16) bildet.

2. Rutschhemmende Bodenplatte (1) nach Anspruch 1, **dadurch gekennzeichnet, dass** zwei benachbarte gerade Streifen orthogonal zueinander ausgerichtet sind.

3. Rutschhemmende Bodenplatte (1) nach einem der vorangehenden Ansprüche, **dadurch gekennzeichnet, dass** sie aus Kunststoffmaterial, insbesondere aus rotationsgeformten Polyethylen, gebildet ist.

4. Haltevorrichtung für Zuchttierpferch, vor allem vom Typ Rinder- und Kälberstall, umfassend eine Umfangsumfriedung, die im unteren Teil mit mindestens einem Spaltenboden ausgestattet ist, der von mindestens einer rutschhemmenden Bodenplatte (1) nach einem der vorangehenden Ansprüche gebildet ist.

## Claims

1. A non-slip floor panel (1) for livestock, assuming the form of a plate and including, arranged protruding from the upper face (4) of the non-slip means, comprising a combination, on the one hand, of first longitudinal elements (9) assuming the form of rectilinear striations and defining a bearing surface and, on the other hand, second periodic elements (10) defining a catching surface, said first (9) and second (10) elements being distributed at regular intervals, two adjacent first longitudinal elements (9) being oriented such that their longitudinal axes are secant, **characterized in that** the second elements (10) are made up of a curve (14) having a cylindrical shape whereof the upper end is topped by a spur (15), said curve (14) comprising a flared edge constituting a collar (16).

2. The non-slip floor panel (1) according to claim 1, **characterized in that** two adjacent rectilinear striations are oriented orthogonally relative to one another.

3. The non-slip floor panel (1) according to any one of the preceding claims, **characterized in that** it is made from plastic, in particular rotomolded polyethylene.

4. A support device for a livestock pen, in particular of the cow and calf stall type, comprising a peripheral enclosure equipped in its underlying part with at least one non-slip floor panel (1) according to any one of the preceding claims.
